# EUROPÄISCHE PATENTANMELDUNG

(11) **EP 1 770 068 A2**
(43) Veröffentlichungstag der Anmeldung: **04.04.2007**
(21) Anmeldenummer: 06020097.9
(22) Anmeldetag: 26.09.2006
(51) Int. Cl.: C02F 1/06, B01D 3/06

(54) **Vorrichtung zum Trennen einer Flüssigkeit von den in ihr gelösten Fremdstoffen**

(30) Priorität: 29.09.2005 DE 102005046643
(71) Anmelder: Rexxon GmbH, 24149 Kiel (DE)
(72) Erfinder: Till Schlickum, D-24113 Kiel (DE)
(74) Vertreter: Biehl, Christian

(57) **Zusammenfassung**

Vorrichtung zum Trennen einer Flüssigkeit von den in ihr gelösten Freindstoffen, mit einer Einrichtung (8) zum Erwärmen der Flüssigkeit und/oder eines Trägergases und einer Mehrzahl von aus jeweils einem Befeuchter (10) und einem Entfeuchter (12) bestehenden Modulen (20), die bezüglich des Flüssigkeitsstroms in Reihe geschaltet sind und in denen der jeweilige Trägcrgasstrom zirkuliert, wobei den Befeuchtern (10) relativ wärmere Flüssigkeit und im Gegenstrom zu dieser das in den Entfeuchtem gekühltes Trägergas zugeführt wird, und die Entfeuchter (12) von relativ kühlerer Flüssigkeit durchströmt werden und das in den Befeuchtern (10) befeuchtete und erwärmte Trägergas im Gegenstrom zugeführt wird, wobei jedes Modul mit einem ersten Kanal (14) zum Zuführen des Trägergases von dem Entfeuchter (12) zu dem Befeuchter (10), einem zweiten Kanal (16) zum Rückführen des Trägergases von dem Befeuchter (10) zu dem Entfeuchter (12), einem Gebläse (22) zur erzwungenen Konvektion des Trägergases und einem Abzug (18) zum Abziehen der aus dem Trägergas auskondensiexten Flüssigkeit aus dem Entfeuchter (12) versehen ist, wobei die Gebläse jedes der Module derart geregelt sind, dass die Wärmekapazitätsströme des Trägergases und der Flüssigkeit in dem jeweiligen Befeuchter (10) und dem jeweiligen Entfeuchter (12) im wesentlichen gleich groß sind.

## Beschreibung

Die Erfindung betrifft eine Vorrichtung zum Trennen einer Flüssigkeit von den in ihr gelösten Stoffen, insbesondere eine Destillations- oder Entsalzungsanlage mit den Merkmalen des Oberbegriffs des Anspruchs 1.

Eine derartige Anlage ist der DE 10 2004 005 689 A1 bekannt. Bei dieser Anlage wird ein optimaler Wirkungsgrad nicht erreicht.

bekannt. Einen besseren Wirkungsgrad erreicht die aus der DE 10 215 079 A1 vorbekannten Anlage, in der die Menge der Flüssigkeit, die aus dem Befeuchter abgeleitet wird, derart gewählt wird, dass die mittlere Temperaturdifferenz zwischen Flüssigkeit und Trägergas in Befeuchter und Entfeuchter im wesentlichen gleich groß ist. Dieses Verfahren hat sich durchaus bewährt, es hat jedoch den Nachteil, dass es relativ aufwendig ist.

Aus der DE 43 40 745 C2 ist eine ähnliche Anlage bekannt, bei der eine durch freie Konvektion hervorgerufene freie seitliche Querströmung des befeuchteten Trägergases in den Entfeuchter und aus dem Befeuchter die Wärmekapazitätsströme im wesentlich gleich groß hält. Aus der DE 24 59 935 A1 ist eine ähnliche Anlage bekannt, bei der das befeuchtete Trägergas frei von dem Befeuchter in den Entfeuchter übertreten kann. Auch diese Verfahren sind nicht optimal.

Der Erfindung liegt damit die Aufgabe zugrunde, eine Vorrichtung der eingangs genannten Art zu schaffen, bei der bei einem relativ einfachen Aufbau eine optimale Angleichung der Wärmekapazitätsströme erfolgt.

Erfindungsgemäß wird diese Aufgabe durch die Merkmale des Anspruchs 1 gelöst, der Unteranspruch geben bevorzugte Ausgestaltung an.

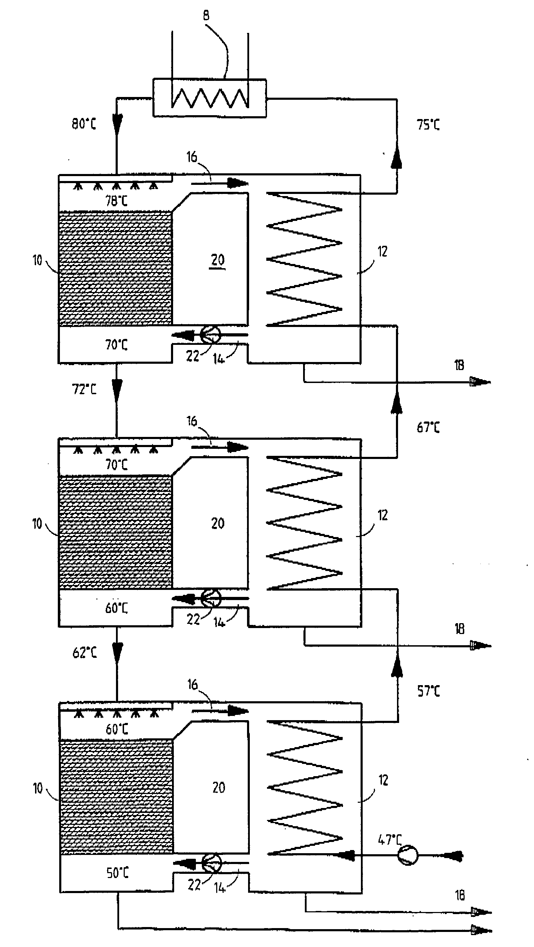

Die Erfindung wird im Folgenden anhand einer Zeichnung erläutert. Dabei zeigt die einzige Figur eine schematische Darstellung einer derartigen Anlage.

Die Anlage besteht aus einer Mehrzahl von Modulen 20, die jeweils einen Befeuchter 10 und einen Entfeuchter 12 aufweisen. Die in dem - in der Zeichnung oben angeordneten - Befeuchter 10 geführte Flüssigkeit wird in den - in der Zeichnung darunter liegenden - Befeuchter 10 eines weiteren Moduls 20 geführt u.s.w. (in der Zeichnung sind lediglich drei Module dargestellt, die Erfindung ist jedoch nicht auf drei derartige Module beschränkt). In jedem der Module zirkuliert ein Trägergas.

Die zu trennende Flüssigkeit wird in den Entfeuchter des in der Zeichnung unten dargestellten Moduls 20 eingeführt, durchströmt diesen unter Wärmeaufnahme nach oben und wird sodann in den darüber angeordnet dargestellten Entfeuchter eines nächsten Moduls 20 u.s.w. geführt. Das - in dem Beispielsfall auf 75° C erwärmte, aus dem obersten der Module austretende Wasser wird durch eine Einrichtung 8 zum Erwärmen der Flüssigkeit, die auf beliebige Weise, etwa durch einen Solarkollektor, beheizt wird, geführt und tritt sodann aus diesem - in der Zeichnung auf 80° C - erwärmt wieder aus und wird in einen Befeuchter 10 des obersten Moduls 20 geführt. In diesem Befeuchter 10 verdunstet die Flüssigkeit unter Wärmeabgabe und die nicht verdunstete Flüssigkeit tritt sodann nach unten in den Befeuchtet 12 eines nachfolgenden Moduls 20 ein u.s.w. Die nach Verdunstung eines Teils der Flüssigkeit konzentrierte Sole wird aus dem Befeuchter 12 des letzten Moduls abgeführt.

Ein Trägergas wird in jedem der Module 20 derart im Kreis geführt, dass es durch einen ersten Kanal 14 dem Befeuchter 10 zugeführt wird und im Befeuchter im Gegenstrom zu der dem Befeuchter 10 zugeführten Flüssigkeit (in der Zeichnung nach oben) strömt und durch einen zweiten Kanal 16 von dem Befeuchter 10 in den Entfeuchter 12, wo es durch den Entfeuchter 12 strömt und dabei Wanne an die Flüssigkeit überträgt. Die Module sind jeweils mit einem Gebläse 22 versehen, das derart gesteuert wird, dass die Wärmekapazitätsströme der Luft und der Flüssigkeit in dem Befeuchter 10 und dem Entfeuchter 12 im Wesentlichen gleich groß sind; die Vorsehung derartiger Gebläse erhöht die Produktivität der Vorrichtung.

Die von den in ihr gelösten Fremdstoffen befreite Flüssigkeit (Produkt) wird aus den Modulen 20 über Leitungen 18 abgeführt. Aus dem untersten Modul ist zudem ein Soleablauf vorgesehen.

## Patentansprüche

1. Vorrichtung zum Trennen einer Flüssigkeit von den in ihr gelösten Fremdstoffen, mit einer Einrichtung (8) zum Erwärmen der Flüssigkeit und/oder eines Trägergases und einer Mehrzahl von aus jeweils einem Befeuchter (10) und einem Entfeuchter (12) bestehenden Modulen (20), die bezüglich des Flüssigkeitsstroms in Reihe geschaltet sind und in denen der jeweilige Trägergasstrom zirkuliert,
wobei den Befeuchtern (10) relativ wärmere Flüssigkeit und im Gegenstrom zu dieser das in den Entfeuchtern gekühltes Trägergas zugeführt wird, und die Entfeuchter (12) von relativ kühlerer Flüssigkeit durchströmt werden und das in den Befeuchtern (10) befeuchtete und erwärmte Trägergas im Gegenstrom zugeführt wird,
wobei jedes Modul mit einem ersten Kanal (14) zum Zuführen des Trägergases von dem Entfeuchter (12) zu dem Befeuchter (10), einem zweiten Kanal (16) zum Rückführen des Trägergases von dem Befeuchter (10) zu dem Entfeuchter (12), einem Gebläse (22) zur erzwungenen Konvektion des Trägergases und einem Abzug (18) zum Abziehen der aus dem Trägergas auskondensierten Flüssigkeit aus dem Entfeuchter (12) versehen ist, **dadurch gekennzeichnet dass**
die Gebläse jedes der Module derart geregelt sind, dass die Wärmekapazitätsströme des Trägergases und der Flüssigkeit in dem jeweiligen Befeuchter (10) und dem jeweiligen Entfeuchter (12) im wesentlichen gleich groß sind.

2. Vorrichtung nach Anspruch 1, **dadurch gekennzeichnet, dass** die Module mit höherer Temperatur der eintretenden Flüssigkeit kleiner sind als die mit niedrigerer Temperatur der eintretenden Flüssigkeit.
